(19) Europäisches Patentamt
European Patent Office
Office européen des brevets

(11) **EP 3 450 168 A1**

(12) **EUROPEAN PATENT APPLICATION**

(43) Date of publication:
**06.03.2019 Bulletin 2019/10**

(51) Int Cl.:
*B33Y 50/00* (2015.01)          *B29C 64/386* (2017.01)
*B29C 64/205* (2017.01)          *B29C 64/227* (2017.01)
*G01B 7/00* (2006.01)

(21) Application number: **17204975.1**

(22) Date of filing: **01.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **30.08.2017   CN 201710763764**

(71) Applicants:
• **XYZprinting, Inc.**
**New Taipei City 22201 (TW)**
• **Kinpo Electronics, Inc.**
**New Taipei City 22201 (TW)**

(72) Inventors:
• **HO, Kwan**
**22201 New Taipei City (TW)**

• **HUANG, Chien-Ying**
**22201 New Taipei City (TW)**
• **CHANG, Chih-Ming**
**22201 New Taipei City (TW)**
• **LEE, Chih-Hao**
**22201 New Taipei City (TW)**
• **TENG, Hung-Tang**
**22201 New Taipei City (TW)**
• **YANG, Chung-Chih**
**22201 New Taipei City (TW)**

(74) Representative: **2K Patentanwälte Blasberg Kewitz & Reichel**
**Partnerschaft mbB**
**Schumannstrasse 27**
**60325 Frankfurt am Main (DE)**

(54) **CALIBRATION METHOD FOR COMPENSATING A HOME POSITION OF A THREE-DIMENSIONAL PRINTER**

(57)      A calibration method for compensating a home position of a 3D printer is disclosed. According to a movement position of a movable mechanism (Xa, Ya, Za) of the 3D printer, a control voltage (Vm) is provided to a microcontroller. The calibration method includes steps as follows. The movable mechanism (Xa, Ya, Za) moves in a home direction (Dh). It is to determine whether the microcontroller receives a first logic level signal which is transited according to the corresponding control voltage (Vm). If yes, the movable mechanism (Xa, Ya, Za) moves in a direction opposite to the home direction (Dh). It is to determine whether the microcontroller receives a second logic level signal which is transited according to the corresponding control voltage (Vm). If yes, the movable mechanism (Xa, Ya, Za) moves a compensation distance corresponding to a step compensation amount in the home direction (Dh). Therefore, the calibration method is provided to reduce circuit costs, simplify designs of control circuits, and accurately calibrate the home position.

FIG.8A

**Description**

BACKGROUND OF THE INVENTION

Technical Field

The technical field relates to a calibration method, and more particularly to a calibration method for compensating home position of a three-dimensional printer.

Description of Related Art

In operations of a three-dimensional printer (hereinafter referred to as "3D printer"), an auto-home operation for each axis of the 3D printer is first performed so that the each axis is ready at its home position (original position) before the 3D starts to operate. After the home-position operation, the home positon is used to be a relative reference position for the corresponding operation axis. For example, the coordinate of the home position is the reference coordinate for commands in a G-code file. In other words, each axis of the 3D printer moves to positions specified according to the G-code commands after the home position is determined. Therefore, the accuracy of the home position of any one axis would affect the fineness of the printed products.

Since the 3D printer may be easily affected by unpredictable vibration, oscillation, or interference of external force or mechanical structure itself, the three-axis home positions cannot be accurately determined. For example, the Z-axis fails to arrive its actual home position due to vibration, oscillation, or interference of external force or mechanical structure itself after the home-position operation, and therefore to affect the fineness of the printed products even if the X-axis and the Y-axis completely arrive their actual home positions. More seriously for the home-position operation, the slight situation would make the printed product rough and the serious situation would need to re-print the product if all three-axis home positions are not accurately determined, thereby consuming time and labor.

In order to solve the problem above, however, a Schmitt trigger circuit or a comparison circuit is additionally installed at an input side of a home position detection circuit to improve accuracy of the home-position operation. However, other problems of increasing circuit costs, complicating designs of control circuits, and occupying larger space for installation are derived due to the installation of the Schmitt trigger circuit or the comparison circuit.

SUMMARY OF THE INVENTION

The present disclosure is directed to a calibration method for compensating a home position of a three-dimensional printer so as to solve problems of increasing circuit costs, complicating designs of control circuits, and occupying larger space for installation.

In one embodiment, the three-dimensional printer provides a sensing switch to sense a movement position of a movable mechanism driven by a motor, and the sensing switch provides a control voltage corresponding to the movement position to a microcontroller. The calibration method includes steps of: moving the movable mechanism in a home direction; determining whether the microcontroller receiving a logic level signal which is transited corresponding to the control voltage; and moving the movable mechanism in a compensation distance corresponding to a step compensation amount in the home direction when the microcontroller receives the logic level signal which is transited.

Accordingly, the calibration method is disclosed to decreasing circuit costs, simplify designs of control circuits, reducing occupied installation space, and accurately calibrate the home position.

In another embodiment, the three-dimensional printer provides a sensing switch to sense a movement position of a movable mechanism driven by a motor, and the sensing switch provides a control voltage corresponding to the movement position to a microcontroller. The calibration method includes steps of: moving the movable mechanism in a home direction; determining whether the microcontroller receiving a first logic level signal which is transited corresponding to the control voltage; moving the movable mechanism in a direction opposite to the home direction when the microcontroller receives the first logic level signal which is transited; determining whether the microcontroller receiving a second logic level signal which is transited corresponding to the control voltage, wherein a logic level of the second logic level signal is opposite to a logical level of the first logic level signal; and moving the movable mechanism in a compensation distance corresponding to a step compensation amount in the home direction when the microcontroller receives the second logic level signal which is transited.

Accordingly, the calibration method is disclosed to decreasing circuit costs, simplify designs of control circuits, reducing occupied installation space, and accurately calibrate the home position.

It is to be understood that both the foregoing general description and the following detailed description are exemplary, and are intended to provide further explanation of the present disclosure as claimed. Other advantages and features of the present disclosure will be apparent from the following description, drawings and claims.

BRIEF DESCRIPTION OF DRAWING

The present disclosure can be more fully understood by reading the following detailed description of the embodiment, with reference made to the accompanying drawings as follows:

FIG. 1A is a circuit diagram of a home position detection circuit of a three-dimensional (3D) printer according to a first embodiment of the present disclosure.
FIG. 1B is a circuit diagram of the home position detection circuit of the 3D printer according to a second embodiment of the present disclosure.
FIG. 2A is an appearance view of the 3D printer according to the present disclosure.
FIG. 2B is a schematic view of detecting a home position of the 3D printer according to the present disclosure.
FIG. 3A is a front view of a contactless switch used for the 3D printer according to the present disclosure.
FIG. 3B is a side view of the contactless switch used for the 3D printer according to the present disclosure.
FIG. 4 is a schematic view of an optical axis length of the contactless switch according to the present disclosure.
FIG. 5 is a hysteresis curve of the contactless switch according to the present disclosure.
FIG. 6A is a schematic view of a movable mechanism of the 3D printer being in a first operation status according to the present disclosure.
FIG. 6B is a schematic view of the movable mechanism of the 3D printer being in a second operation status according to the present disclosure.
FIG. 6C is a schematic view of the movable mechanism of the 3D printer being in a third operation status according to the present disclosure.
FIG. 7A is a flowchart of a method for compensating a home position of the 3D printer according to a first embodiment of the present disclosure.
FIG. 7B is a schematic view of a compensation of the home position of the 3D printer according to the first embodiment of the present disclosure.
FIG. 7C is a flowchart of the method for compensating the home position of the 3D printer according to a second embodiment of the present disclosure.
FIG. 8A is a flowchart of the method for compensating the home position of the 3D printer according to a third embodiment of the present disclosure.
FIG. 8B is a schematic view of the compensation of the home position of the 3D printer according to the third embodiment of the present disclosure.
FIG. 8C is a flowchart of the method for compensating the home position of the 3D printer according to a fourth embodiment of the present disclosure.
FIG. 8D is a flowchart of the method for compensating the home position of the 3D printer according to a fifth embodiment of the present disclosure.

DETAILED DESCRIPTION OF THE INVENTION

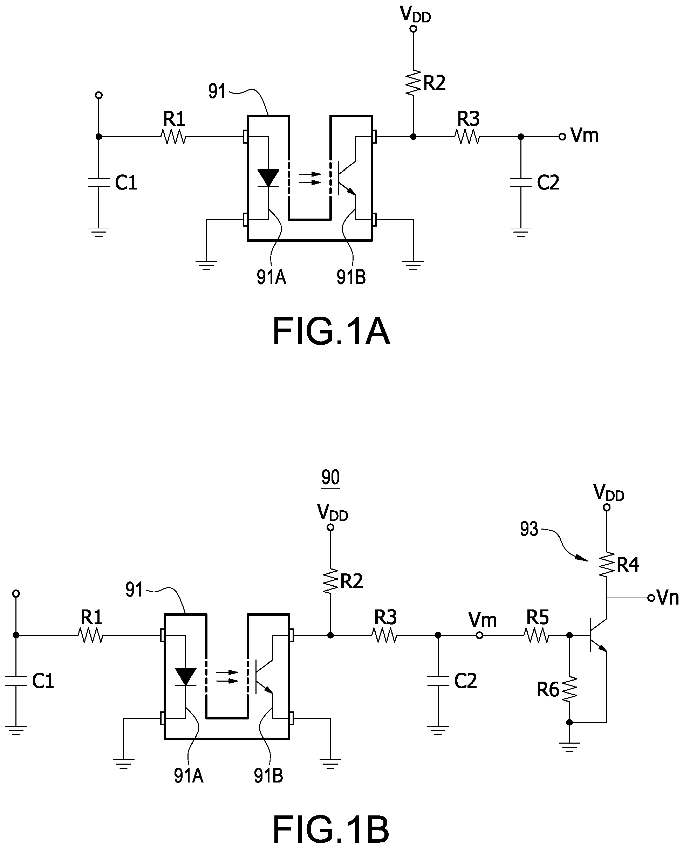

Reference will now be made to the drawing figures to describe the present disclosure in detail. It will be understood that the drawing figures and exemplified embodiments of present disclosure are not limited to the details thereof.
Please refer to FIG. 1A, which shows a circuit diagram of a home position detection circuit of a three-dimensional (3D) printer according to a first embodiment of the present disclosure. The home position detection circuit 90 has a sensing switch. As shown in FIG. 1A, the sensing switch is, for example but not limited to, a contactless switch, such as a photo interrupter switch or a proximity switch. Also, the sensing switch may be a contact switch.
The above-mentioned proximity switch (also referred to as "non-contact travel switch") may be classified into following types. The first one is an eddy current proximity switch (also referred to as "inductive proximity switch"). When a conductive object moves closer to the eddy current proximity switch, an internal eddy current is produced in the conductive object due to a generated electromagnetic field. The internal eddy current reacts to the eddy current proximity switch so as to change internal circuit parameters of the eddy current proximity switch, and therefore the eddy current proximity switch can sense or recognize wither the conductive object moves closer to itself or not to provide turned-on and turned-off controls of the eddy current proximity switch. The second one is a Hall effect proximity switch (also referred to as "magnetic sensitive switch"). When a magnetic object moves closer to the Hall effect proximity switch, the Hall effect proximity switch changes its internal circuit state due to a Hall effect produced by a Hall sensor installed in the Hall effect proximity switch, and therefore to sense or recognize wither the magnetic object moves closer to itself or not to provide turned-on and turned-off controls of the Hall effect proximity switch. The third one is an inductive proximity switch. An oscillator, composed of inductance coils, capacitors, and transistors, of the inductive proximity switch produces an alternating magnetic field. When a metal object moves closer to the alternating magnetic field, an internal eddy current is produced in the metal object to make the oscillator stop oscillating, thereby providing turned-on and turned-off controls of the inductive proximity switch.

In summary, a suitable contactless switch can be selected and used depending on different types of the objects to be sensed to accurately sense the movement position of the object to be sensed. For example, if the object to be sensed is a conductive object, the eddy current proximity switch is appropriately used; if the object to be sensed is a magnetic object, the Hall effect proximity switch is appropriately used; and if the object to be sensed is a metal object, the inductive proximity switch is appropriately used.

In one embodiment, the contact switch may be a micro switch, a limit switch, a pressure switch, or a piezo switch. The contact switch is used to output an electrical parameter, such as a voltage parameter, current parameter, or resistance parameter by converting the received force, and therefore to detect the movement distance of the object to be sensed.

Regardless of the contactless switch or the contact switch, the outputted electrical parameters can be provided to detect the movement distance or the movement distance change rate of the object to be sensed. Take the voltage parameter for example, each sensing switch can sense the distance which the object moves and the position which the object moves to according to a positive correlation relationship between the voltage values outputted therefrom and the distance which the object moves or a positive correlation relationship between the voltage variation and the distance change rate of the object.

Moreover, each sensing switch can sense the distance which the object moves and the position which the object moves to according to a negative correlation relationship between the voltage values outputted therefrom and the distance which the object moves or a negative correlation relationship between the voltage variation and the distance change rate of the object. In addition, the current parameter or the resistance parameter may be used instead of the voltage parameter by the conversion between electrical parameters to achieve the movement distance detection of the object to be sensed.

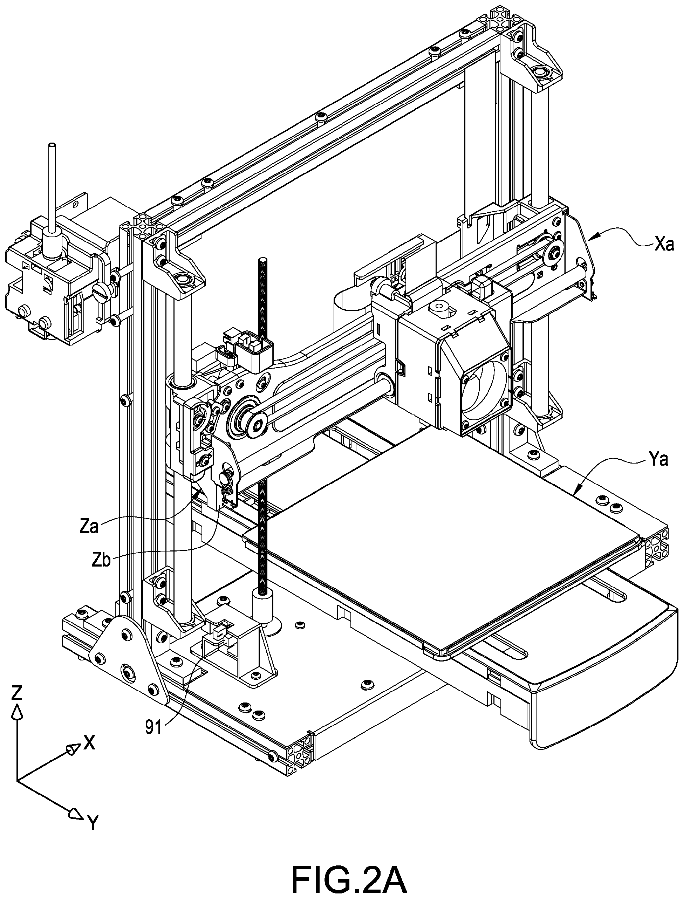

In this embodiment, the photo interrupter switch is exemplified as the sensing switch for further demonstration. Please refer to FIG. 2A, which shows an appearance view of the 3D printer according to the present disclosure. The home position detection circuit 90, which is installed on the 3D printer, is used for detecting a home position of each axis. The home position detection circuit 90 mainly includes a photo interrupter switch 91 with an input side and an output side. The input side of the photo interrupter switch 91 has a light-emitting element 91A, such as a light-emitting diode, and the output side of the photo interrupter switch 91 has a light-receiving element 91B, such as a phototransistor. The light-emitting element 91A emits an infrared light and the light-receiving element 91B receives the infrared light emitted from the light-emitting element 91A. When the light-receiving element 91B does not receive the infrared light, it means that an optical path between light-emitting element 91A and the light-receiving element 91B is blocked by an object. On the contrary, when the light-receiving element 91B receives the infrared light, it means that the optical path is not blocked or is not completely blocked by the object.

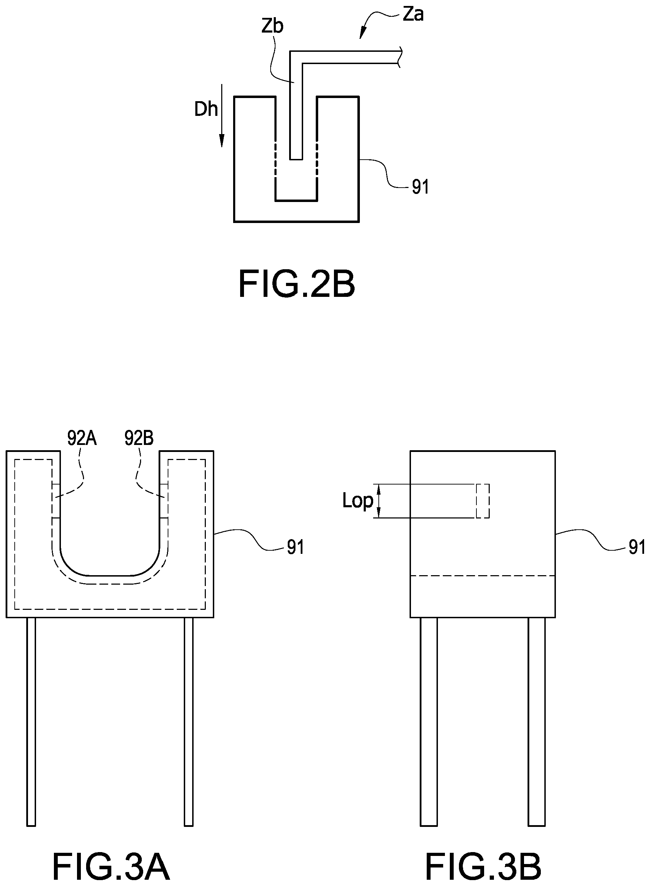

Please refer to Fig. 2B, which shows a schematic view of detecting a home position of the 3D printer according to the present disclosure. In this embodiment, a movable mechanism, which moves in a Z-axis direction (hereinafter referred to as "Z-axis movable mechanism Za") is exemplified for further demonstration. Moreover, a barrier plate Zb or the like extends from the Z-axis movable mechanism Za. For convenience of explanation, the Z-axis movable mechanism Za is a general mechanism, which includes integral moving parts of the corresponding axis. Refer to FIG. 1A again, when the Z-axis movable mechanism Za moves to the home position in the home direction Dh and the barrier plate Zb has not been inserted into the photo interrupter switch 91, the photo interrupter switch 91 is turned on, and therefore the home position detection circuit 90 outputs a control voltage Vm with a voltage value of zero volt to a microcontroller (not shown). In particular, the microcontroller may be, for example but not limited to, implemented by a transistor circuit, such as a TTL (transistor-transistor logic) or a CMOS (complementary metal-oxide semiconductor).

Further, when the Z-axis movable mechanism Za continuously moves to the home position in the home direction and the barrier plate Zb interrupts the optical path between the light-emitting element 91A and the light-receiving element 91B, the voltage value of the control voltage Vm would be varied depending on the amount of a light-blocking region. For example, it is assumed that a power voltage (also referred to as "bias voltage") is supplied to the home position detection circuit 90, and the maximum value of the power voltage $V_{DD}$ is 3.3 volts. When the barrier plate Zb completely blocks (interrupts) the light between the light-emitting element 91A and the light-receiving element 91B, the voltage value of the control voltage Vm outputted from the home position detection circuit 90 is 3.3 volts, namely the maximum value of the power voltage $V_{DD}$.

Please refer to FIG. 1B, which shows a circuit diagram of the home position detection circuit of the 3D printer according to a second embodiment of the present disclosure. The major difference between the second embodiment shown in FIG. 1B and the first embodiment shown in FIG. 1A is that the home position detection circuit 90 of the former further an inverting unit 93. The inverting unit 93 is connected between the control voltage Vm and the microcontroller, and the inverting unit 93 is used to invert the control voltage Vm into an inverting control voltage Vn. As shown in FIG. 1B, the inverting unit 93 can be, for example but not limited to, implemented by a BJT (bipolar junction transistor) and a resistor network including resistors R4,R5,R6. In addition, the inverting unit 93 may be implemented by a FET (field-effect transistor) and a resistor network, a TTL and a resistor network, or an inverting logic gate.

When the inverting unit 93 receives the control voltage Vm, the inverting unit 93 inverts the control voltage Vm into the inverting control voltage Vn. As mentioned in FIG. 1A, when the barrier plate Zb completely blocks the light between the light-emitting element 91A and the light-receiving element 91B, the voltage value of the control voltage Vm outputted from the home position detection circuit 90 is 3.3 volts. Further, the voltage value of the control voltage Vm is inverted by the inverting unit 93 into the inverting control voltage Vn equal to zero. On the contrary, when the barrier plate Zb does not make the infrared light be blocked between the light-emitting element 91A and the light-receiving element 91B, the voltage value of the control voltage Vm outputted from the home position detection circuit 90 is zero. Further, the voltage value of the control voltage Vm is inverted by the inverting unit 93 into the inverting control voltage Vn equal to 3.3 volts. In other words, the inverting control voltage Vn and the control voltage Vm are inverted to each other, and therefore the detail description is omitted here for conciseness.

Please refer to FIG. 3A and FIG. 3B, which show a front view and a side view of a contactless switch used for the 3D printer according to the present disclosure, respectively. In this embodiment, the contactless switch is a photo interrupter switch 91. The photo interrupter switch 91 includes a main body having a first opening 92A and a second opening 92B, a light-emitting element 91A (also shown in FIG. 1A), and a light-receiving element 91B (also shown in FIG. 1B). The light-emitting element 91A is contained in the main body and outwardly provides a light source through the first opening 92A. The light-receiving element 91B is contained in the main body and receives the light source provided from the light-emitting element 91A through the second opening 92B. The second opening 92B has an optical axis length Lop and the second opening 92B is aligned with the first opening 92A. In particular, the optical axis length Lop is an effective length of light sensing for the photo interrupter switch 91.

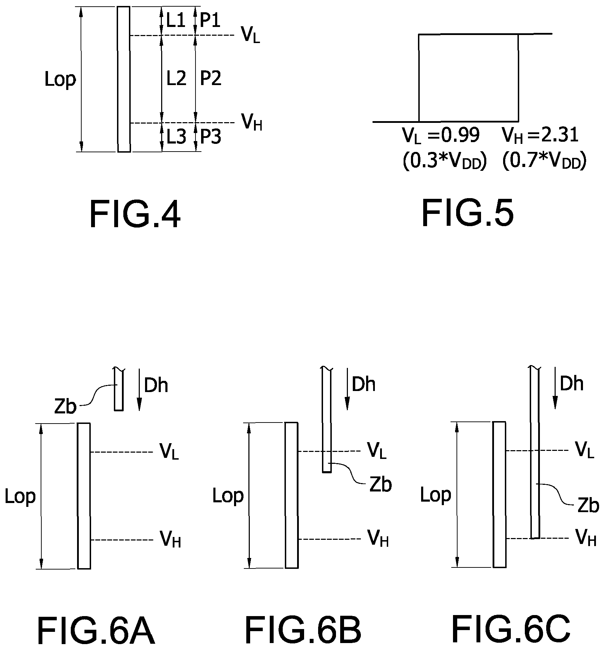

Please refer to FIG. 4, which shows a schematic view of an optical axis length of the contactless switch according to the present disclosure. The optical axis length Lop labeled in FIG. 4 represents an effective length of light sensing for the photo interrupter switch 91, namely an effective light-blocking length of the light-receiving element 91B. The labeled "$V_L$" represents a low-level input voltage of a transistor used for the microcontroller (hereinafter referred to as "transistor"), that is, when an input voltage of the transistor is less than or equal to the low-level input voltage $V_L$, the transistor receives a logic low-level voltage, namely a logic zero level. The low-level input voltage $V_L$ is related to an inherent characteristic of the transistor, and is usually defined as 0.3 times of the maximum value of the power voltage $V_{DD}$, namely $0.3 \times V_{DD}$. The labeled "$V_H$" represents a high-level input voltage of the transistor, that is, when the input voltage of the transistor is greater than or equal to the high-level input voltage $V_H$, the transistor receives a logic high-level voltage, namely a logic one level. The high-level input voltage $V_H$ is related to the inherent characteristic of the transistor, and is usually defined as 0.7 times of the maximum value of the power voltage $V_{DD}$, namely $0.7 \times V_{DD}$. A relationship between the low-level input voltage $V_L$ and the high-level input voltage $V_H$ can be shown in FIG. 5, which shows a hysteresis curve of the contactless switch according to the present disclosure. In this embodiment, the low-level input voltage $V_L$ of the transistor is set as 0.3 times of the maximum value of the power voltage $V_{DD}$. For example, if the maximum value of the power voltage $V_{DD}$ is 3.3 volts, the low-level input voltage $V_L$ is 0.99 volts. Also, the high-level input voltage $V_H$ of the transistor is set as 0.7 times of the maximum value of the power voltage $V_{DD}$. For example, if the maximum value of the power voltage $V_{DD}$ is 3.3 volts, the low-level input voltage $V_L$ is 2.31 volts. The labeled "L1" to "L3" represent that the movable mechanism moves in the distance corresponding to the optical axis length Lop. The labeled "L1" to "L3" represent the number of steps of the motor corresponding to the movable mechanism in the optical axis length Lop.

Furthermore, when the Z-axis movable mechanism Za moves from top to bottom in the distance of L1 and L2, the control voltage Vm gradually increases to reach the high-level input voltage $V_H$ so that the microcontroller receives the logic high-level voltage, namely the logic one level. On the contrary, when the Z-axis movable mechanism Za moves from bottom to top in the distance of L3 and L2, the control voltage Vm gradually decreases to reach the low-level input voltage $V_L$ so that the microcontroller receives the logic low-level voltage, namely the logic zero level.

An example is exemplified for further description in Table 1 and Table 2 below. The optical axis length Lop is 1.2 mm and total steps of the motor is 1152 steps corresponding to the optical axis length Lop. The maximum value of the power voltage $V_{DD}$ is 3.3 volts, and other calculated values L1-L3 and P1-P3 are listed in Table 1. Similarly, the optical axis length Lop is 1.2 mm and total steps of the motor is 1152 steps corresponding to the optical axis length Lop. The maximum value of the power voltage $V_{DD}$ is 5.0 volts, and other calculated values L1-L3 and P1-P3 are listed in Table 2.

Table 1

| Lop=1.2 mm, Pm= 1152 steps | | |
|---|---|---|
| $V_{DD}$=3.3 volts | $V_L$=0.99 volts | $V_H$=2.31 volts |
| L1=0.3604 mm | L2=0.4792 mm | L3=0.3604 mm |
| P1=346 steps | P2=460 steps | P3=346 steps |

Table 2

| Lop=1.2 mm, Pm= 1152 steps | | |
|---|---|---|
| $V_{DD}$=5.0 volts | $V_L$=1.50 volts | $V_H$=3.50 volts |
| L1=0.3604 mm | L2=0.4792 mm | L3=0.3604 mm |
| P1=346 steps | P2=460 steps | P3=346 steps |

In order to clearly explain the present disclosure, different embodiments will be described as follows. Please refer to FIG. 6A to FIG. 6C, which show schematic views of the movable mechanism of the 3D printer being in three different operation statuses according to the present disclosure, respectively. As shown in FIG. 6A, the barrier plate Zb of the Z-axis movable mechanism Za moves to the home position in the home direction Dh and the barrier plate Zb does not make the infrared light be blocked between the light-emitting element 91A and the light-receiving element 91B, and therefore the control voltage Vm provided from the home position detection circuit 90 to the microcontroller is zero volt and the microcontroller (transistor) receives the logic low-level voltage.

As shown in FIG. 6B, the barrier plate Zb continuously moves to the home position in the home direction Dh. Since the barrier plate Zb partially blocks the photo interrupter switch 91 and the amount of the light-blocking region gradually increases, the control voltage Vm is gradually increased from zero volt. Also, since the control voltage Vm, namely an input power voltage of the microcontroller has not reached the high-level input voltage $V_H$, such as 2.31 volts in this embodiment so that the microcontroller receives a logic level signal which has not transited, namely it is still the logic low-level voltage.

As shown in FIG. 6C, the barrier plate Zb continuously moves to the home position in the home direction Dh. When the amount of the light-blocking region continuously increases so that the control voltage Vm, namely the input power voltage of the microcontroller reaches the high-level input voltage $V_H$, the microcontroller receives the logic level signal which is transited, namely the logic level signal is transited from the logic low-level signal (logic 0) to the logic high-level signal (logic 1). Finally, the Z-axis movable mechanism Za moves to arrive the home position, and therefore the motor stops driving the Z-axis movable mechanism Za to complete the home-position operation.

The above-mentioned descriptions of the FIG. 6A to FIG. 6C are based on the normal operations of the Z-axis movable mechanism Za Without vibration, oscillation, or interference so that the microcontroller can determine that the Z-axis movable mechanism Za has arrived the home position according to the voltage transitions. In the actual operation, although the Z-axis movable mechanism Za has not arrived the home position, the home position detection circuit 90 determines that the Z-axis movable mechanism Za has arrived the home position due to vibration, oscillation, or interference of external force or mechanical structure itself, thereby reducing the accuracy of the home position.

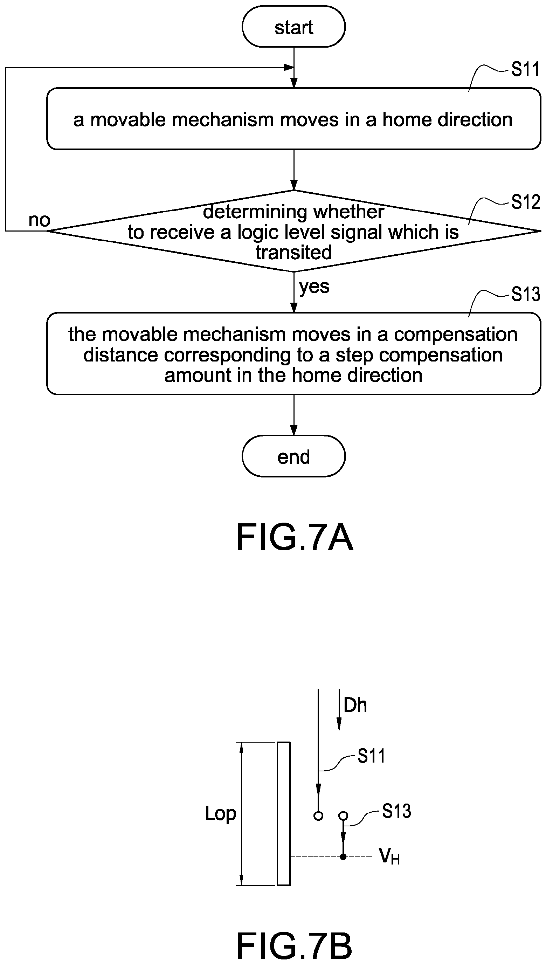

Please refer to FIG. 7A, which shows a flowchart of a method for compensating a home position of the 3D printer according to a first embodiment of the present disclosure. The 3D printer provides a sensing switch, such as a contactless switch with an optical axis length in this embodiment. The contactless switch is used to sense a moving position of a movable mechanism driven by a motor and outputs a power voltage corresponding to the moving position to a microcontroller. A print head of the 3D printer is installed on the movable mechanism. In addition, also refer to FIG. 7B, which shows a schematic view of a compensation of the home position of the 3D printer according to the first embodiment of the present disclosure.

The steps of the first embodiment are described as follows. First, the movable mechanism moves in a home direction (S11). The movable mechanism may be one of an X-axis movable mechanism, a Y-axis movable mechanism, and a Z-axis movable mechanism of the 3D printer. In other words, the calibration compensation method is applicable to one of the X-axis movable mechanism, the Y-axis movable mechanism, and the Z-axis movable mechanism of the 3D printer. In this embodiment, the Z-axis movable mechanism is, not limited to, exemplified for further demonstration of the calibration compensation. Moreover, the calibration compensation method may be also applicable to a co-axis movable mechanism, such as an X&Y-axis movable mechanism, an X&Z axis movable mechanism, or a Y&Z axis movable mechanism. In this embodiment, the -axis movable mechanism is, not limited to, exemplified for further demonstration of the calibration compensation. Moreover, the calibration compensation method may be also applicable to a co-axis movable mechanism, such as an X&Y-axes movable mechanism, an X&Z-axes movable mechanism, or a Y&Z-axes movable mechanism. In this embodiment, the Z-axis movable mechanism Za is exemplified for further demonstration of the calibration compensation method.

Afterward, it is to determine whether the microcontroller receives a logic level signal which is transited (S12). As mentioned above, the microcontroller receives the power voltage, outputted from the contactless switch, corresponding to the moving position, and the voltage value of the power voltage is related to the light-blocking region of the contactless switch. More specifically, when the barrier plate of the movable mechanism does not block the light of the contactless switch or the light-blocking region of the contactless switch is not insufficient, the power voltage fails to make the logic level signal received by the microcontroller be transited. In this embodiment, the logic level signal is a logic high-level signal, namely the logic level signal cannot be transited from a logic low-level signal to the logic high-level signal (rising-edge trigger transition). The logic high-level signal is corresponding to 0.7 times of the maximum value of the power voltage, namely the logic high-level signal is corresponding to 2.31 volts when the maximum value of the power voltage is 3.3 volts. Therefore, the step (S11) is performed after the step (S12), namely the movable mechanism driven by the motor continuously moves in the home direction.

Until the light-blocking region of the contactless switch gradually increases to make the logic level signal received by the microcontroller be transited, namely the logic level signal is transited from the logic low-level signal to the logic high-level signal (rising-edge trigger transition), and the determination in the step (S12) is "YES". At this time, home position detection circuit 90 determines that the Z-axis movable mechanism Za has arrived the home position. In fact, the Z-axis movable mechanism Za has not arrived the home position due to vibration, oscillation, or interference of external force or pressure. For example, although the Z-axis movable mechanism Za has not arrived the home position, the home position detection circuit 90 determines that the Z-axis movable mechanism Za has arrived the home position due to vibration, oscillation, or interference of external force or pressure. In fact, the Z-axis movable mechanism Za would restore its actual position when the external force or pressure is not considered or excluded, that is, the Z-axis movable mechanism Za has not arrived the home position. If the "wrong" home position where the Z-axis movable mechanism Za finally arrives does not be corrected or compensated, the "wrong" home position will become a reference position for the next printing operations of the corresponding movable mechanism, and therefore the position error of the corresponding movable mechanism would be generated. In other words, when the determination in the step (S12) is "YES", the position, shown by a hollow circle symbol in FIG. 7B, where the Z-axis movable mechanism Za finally arrives may be not the true starting (home) position. Therefore, the "wrong" home position where the Z-axis movable mechanism Za finally arrives is corrected or compensated in step (S13).

In the step (S13), the motor drives the movable mechanism to further move in a compensation distance corresponding to a step compensation amount in the home direction. The compensation distance is provided for the movable mechanism to compensate for a position error generated by vibration, oscillation, or interference so that the movable mechanism closely arrives and even arrives the actual Home position, thereby accurately calibrating the home position.

As mentioned above, the voltage parameter is used for explanation of the contactless switch. Each sensing switch can sense the distance which the object moves and the position which the object moves to according to a positive correlation relationship between the voltage values outputted (or after converted) therefrom and the distance which the object moves or a positive correlation relationship between the voltage variation and the position change rate of the object. That is, the voltage variation of the control voltage Vm is corresponding to a position change rate of moving the movable mechanism. More specifically, the step compensation amount Sc in the step (S13) is:

$$Sc = \frac{\Delta V}{Vx} \times Pm \ ;$$

where Sc is the step compensation amount, $\Delta V$ is the voltage variation of the control voltage, Vx is the maximum value of the control voltage, and Pm is the number of total steps of the motor corresponding to complete movement of the movable mechanism in the optical axis length Lop.

Correspondingly, when the sensing switch is the photo interrupter switch 91, the step compensation amount Sc in the step (S13) is:

$$Sc = \frac{V_H - V_L}{V_{DD}} \times Pm \ ;$$

where Sc is the step compensation amount, $V_H$ is 0.7 times of the maximum value of the power voltage, $V_L$ is 0.3 times of the maximum value of the power voltage, $V_{DD}$ is the maximum value of the power voltage, and Pm is 1152 steps of the motor corresponding to 1.2 mm of the optical axis length Lop.

Taking the data listed in the Table 1 as an example, the maximum value of the power voltage $V_{DD}$ is 3.3 volts, the 0.7 times of the maximum value of the power voltage $V_H$ is 2.31 volts, the 0.3 times of the maximum value of the power voltage $V_{DD}$ is 0.99 volts, and the Pm is 1152 steps, and therefore the step compensation amount Sc is calculated to 460 steps. In other words, the compensation distance corresponding to the step compensation amount Sc (460 steps) is 0.4792 mm since the complete movement (1.2 mm) of the movable mechanism in the optical axis length Lop corresponds to 1152 steps of the motor. Accordingly, the movable mechanism further moves 0.4792 mm in the home direction Dh so as to closely arrive and even arrives the actual home position, shown by a solid circle symbol in FIG. 7B, thereby accurately calibrating the home position.

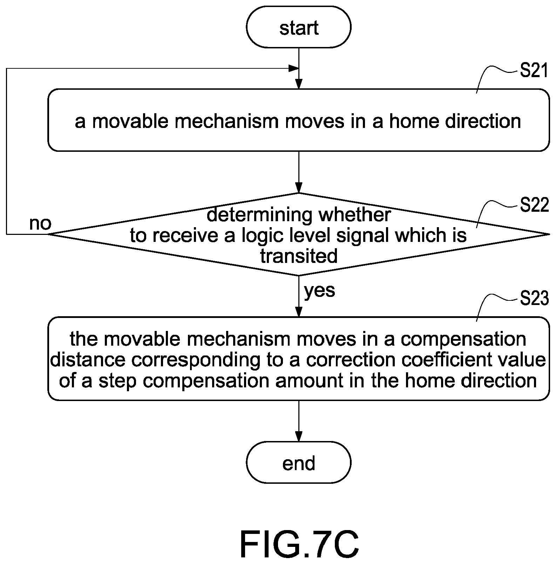

Please refer to FIG. 7C, which shows a flowchart of the method for compensating the home position of the 3D printer according to a second embodiment of the present disclosure. Since the steps (S21) and (S22) shown in FIG. 7C are identical to the steps (S11) and (S12) shown in FIG. 7A, the detail descriptions of the steps (S21) and (S22) are omitted here for conciseness. Similarly, the "wrong" home position where the Z-axis movable mechanism Za finally arrives is corrected or compensated in step (S23) after the determination in the step (S22) is "YES".

In the step (S23), the movable mechanism further moves in a compensation distance corresponding to a correction coefficient value of the step compensation amount in the home direction, and the correction coefficient value is a positive number less than 1. In other words, the compensation distance in the second embodiment is less than the compensation distance in the first embodiment. In this embodiment, the correction coefficient value is introduced to fine tune the step compensation amount so as to provide more accurate calibration compensation than that in the first embodiment, and therefore a step compensation amount Sc' in the step (S23) is:

$$ Sc' = \left( \frac{V_H - V_L}{V_{DD}} \times Pm \right) \times Cm = Sc \times Cm \ ; $$

where Sc' is the step compensation amount, $V_H$ is 0.7 times of the maximum value of the power voltage, $V_L$ is 0.3 times of the maximum value of the power voltage, $V_{DD}$ is the maximum value of the power voltage, Pm is 1152 steps of the motor corresponding to 1.2 mm of the optical axis length Lop, and Cm is the correction coefficient value which is a positive number less than 1. In this embodiment, the correction coefficient value Cm may be, for example but not limited to, 0.8. In particular, the correction coefficient value could be adaptably modified according to the actual operations of the 3D printer. For example, the correction coefficient value could be adaptably modified according to the degree of vibration, oscillation, or interference, that is, when the degree of vibration, oscillation, or interference is larger, the correction coefficient value Cm may be increased to compensate much insufficient distance; on the contrary, when the degree of vibration, oscillation, or interference is smaller, the correction coefficient value Cm may be decreased to compensate little insufficient distance.

Similarly, taking the data listed in the Table 1 as an example, the maximum value of the power voltage $V_{DD}$ is 3.3 volts, the 0.7 times of the maximum value of the power voltage $V_H$ is 2.31 volts, the 0.3 times of the maximum value of the power voltage $V_{DD}$ is 0.99 volts, the Pm is 1152 steps, and the correction coefficient value Cm is 0.8, and therefore the step compensation amount Sc' is calculated to 368 steps. In other words, the compensation distance corresponding to the step compensation amount Sc (368 steps) is 0.3834 mm since the complete movement (1.2 mm) of the movable mechanism in the optical axis length Lop corresponds to 1152 steps of the motor. Accordingly, the movable mechanism further moves 0.3834 mm in the home direction Dh so as to closely arrive and even arrives the actual home position, thereby accurately calibrating the home position.

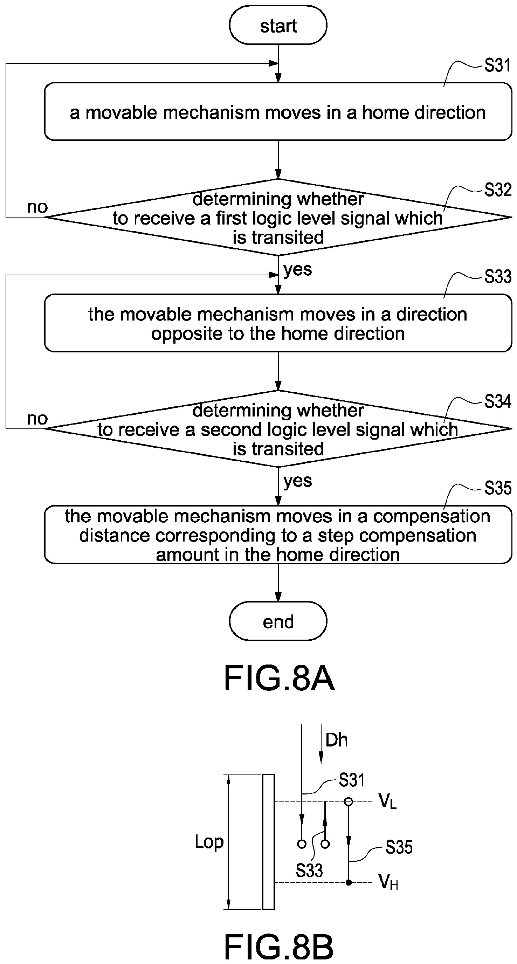

Please refer to FIG. 8A, which shows a flowchart of the method for compensating the home position of the 3D printer according to a third embodiment of the present disclosure. The steps of the third embodiment are described as follows. First, the movable mechanism moves in a home direction (S31). In this embodiment, the Z-axis movable mechanism is, not limited to, exemplified for further demonstration of the calibration compensation. Moreover, the Z-axis movable mechanism is driven by the motor to move to the home position in the Z-axis direction. Also, refer to FIG. 8B, which shows a schematic view of the compensation of the home position of the 3D printer according to the third embodiment of the present disclosure.

Afterward, it is to determine whether the microcontroller receives a first logic level signal which is transited (S32). As mentioned above, the microcontroller receives the power voltage, outputted from the contactless switch, corresponding to the moving position, and the voltage value of the power voltage is related to the light-blocking region of the contactless switch. More specifically, when the barrier plate of the movable mechanism does not block the light of the contactless switch or the light-blocking region of the contactless switch is not insufficient, the power voltage fails to make the first logic level signal received by the microcontroller be transited. In this embodiment, the first logic level signal is a logic high-level signal, namely the first logic level signal cannot be transited from a logic low-level signal to the logic high-level signal (rising-edge trigger transition). The logic high-level signal is corresponding to 0.7 times of the maximum value of the power voltage, namely the logic high-level signal is corresponding to 2.31 volts when the maximum value of the power voltage is 3.3 volts. Therefore, the step (S31) is performed after the step (S32), namely the movable mechanism driven by the motor continuously moves in the home direction.

Until the light-blocking region of the contactless switch gradually increases to make the first logic level signal received by the microcontroller be transited, namely the first logic level signal is transited from the logic low-level signal to the logic high-level signal (rising-edge trigger transition), and the determination in the step (S32) is "YES". At this condition, the home position detection circuit 90 determines that the Z-axis movable mechanism Za has arrived the home position. As mentioned above, the movable mechanism fails to arrive its actual home position due to vibration, oscillation, or interference of external force or pressure during the operations of the 3D printer. In other words, when the determination in the step (S32) is "YES", the position, shown by a (left) hollow circle symbol in FIG. 8B, where the Z-axis movable mechanism Za finally arrives may be not the true starting (home) position. Therefore, the "wrong" home position where the Z-axis movable mechanism Za finally arrives is corrected or compensated in steps (S33) to (S35).

When it is to determine that the microcontroller receives the first logic level signal which is transited, the motor drives the movable mechanism to move in a direction opposite to the home direction (S33), namely the movable mechanism moves in a direction away from the home direction. Afterward, it is to determine whether the microcontroller receives a second logic level signal which is transited (S34). In this embodiment, the second logic level signal is a logic low-level signal, namely the second logic level signal cannot be transited from a logic high-level signal to the logic low-level signal (falling-edge trigger transition). The logic low-level signal is corresponding to 0.3 times of the maximum value of the power voltage, namely the logic low-level signal is corresponding to 0.99 volts when the maximum value of the power voltage is 3.3 volts. Therefore, the step (S33) is performed after the step (S34), namely the movable mechanism driven by the motor continuously moves in the direction opposite to the home direction.

Until the light-blocking region of the contactless switch gradually decreases to make the second logic level signal received by the microcontroller be transited, namely the second logic level signal is transited from the logic high-level signal to the logic low-level signal (falling-edge trigger transition). At this condition, the Z-axis movable mechanism Za moves to the position shown by a (right) hollow circle symbol in FIG. 8B and the determination in the step (S34) is "YES". Afterward, the movable mechanism movies in a compensation distance corresponding to a step compensation amount in the home direction (S35). After the movable mechanism moves to the position where the logic level signal is transited from the logic low-level signal to the logic high-level signal (rising-edge trigger transition), the movable mechanism moves in the direction opposite to the home direction to the positon where the logic level signal is transited from the logic high-level signal to the logic low-level signal (falling-edge trigger transition) to provide a reference position and then the movable mechanism further moves the compensation distance in the home direction Dh depending on the reference position as to closely arrive and even arrives the actual home position, shown by a solid circle symbol in FIG. 8B, thereby accurately calibrating the home position.

As mentioned above, the voltage parameter is used for explanation of the contactless switch. Each sensing switch can sense the distance which the object moves and the position which the object moves to according to a positive correlation relationship between the voltage values outputted (or after converted) therefrom and the distance which the object moves or a positive correlation relationship between the voltage variation and the position change rate of the object. That is, the voltage variation of the control voltage Vm is corresponding to a position change rate of moving the movable mechanism. More specifically, the step compensation amount Sc in the step (S35) is:

$$Sc = \frac{\Delta V}{Vx} \times Pm \ ;$$

where Sc is the step compensation amount, $\Delta V$ is the voltage variation of the control voltage, Vx is the maximum value of the control voltage, and Pm is the number of total steps of the motor corresponding to complete movement of the movable mechanism in the optical axis length Lop.

Correspondingly, when the sensing switch is the photo interrupter switch 91, the step compensation amount Sc in the step (S35) is:

$$Sc = \frac{V_H - V_L}{V_{DD}} \times Pm \ ;$$

where Sc is the step compensation amount, $V_H$ is 0.7 times of the maximum value of the power voltage, $V_L$ is 0.3 times of the maximum value of the power voltage, $V_{DD}$ is the maximum value of the power voltage, and Pm is 1152 steps of the motor corresponding to 1.2 mm of the optical axis length Lop.

Taking the data listed in the Table 1 as an example, the maximum value of the power voltage $V_{DD}$ is 3.3 volts, the 0.7 times of the maximum value of the power voltage $V_H$ is 2.31 volts, the 0.3 times of the maximum value of the power voltage $V_{DD}$ is 0.99 volts, and the Pm is 1152 steps, and therefore the step compensation amount Sc is calculated to 460 steps. In other words, the compensation distance corresponding to the step compensation amount Sc (460 steps) is 0.4792 mm since the complete movement (1.2 mm) of the movable mechanism in the optical axis length Lop corresponds to 1152 steps of the motor. Accordingly, the movable mechanism moves 0.4792 mm in the home direction Dh from the position where the logic level signal is transited from the logic high-level signal to the logic low-level signal (falling-edge trigger transition) so as to closely arrive and even arrives the actual home position, thereby accurately calibrating the home position.

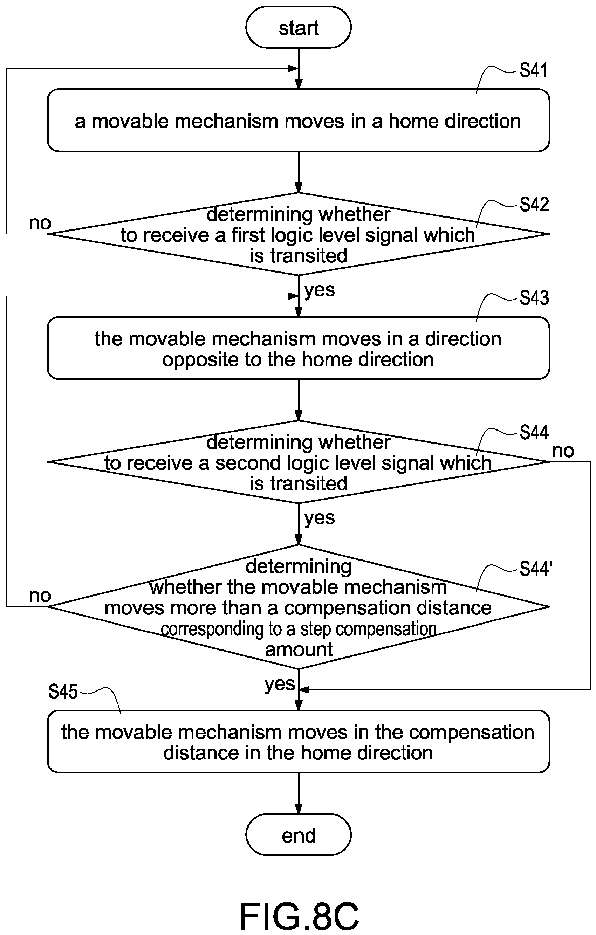

Please refer to FIG. 8C, which shows a flowchart of the method for compensating the home position of the 3D printer according to a fourth embodiment of the present disclosure. Since the steps (S41) to (S45) shown in FIG. 8C are identical to the steps (S31) to (S35) shown in FIG. 8A, the detail descriptions of the steps (S41) to (S45) are omitted here for conciseness. The major difference between the fourth embodiment shown in FIG. 8C and the third embodiment shown in FIG. 8A is that the former further provides a step (S44') after the step (S43), and the step (S44') is to determine whether the movable mechanism moves more than the compensation distance corresponding to the step compensation amount. After the logic level signal is transited from the logic low-level signal to the logic high-level signal (rising-edge trigger transition), the movable mechanism moves in a direction opposite to the home direction, namely moves to the position where the logic level signal is transited from the logic high-level signal to the logic low-level signal (falling-edge trigger transition). If the movable mechanism has not arrived the position where the logic level signal is transited from the logic high-level signal to the logic low-level signal (falling-edge trigger transition), and the determination in the step (S44') is "NO". On the contrary, if the movable mechanism has arrived or even exceeded the position where the logic level signal is transited from the logic high-level signal to the logic low-level signal (falling-edge trigger transition), namely the movable mechanism moves more than 0.4792 mm (460-step step compensation amount), the home position detection circuit 90 determines that the movable mechanism has exceeded the position where the logic level signal is transited from the logic high-level signal to the logic low-level signal (falling-edge trigger transition), the step (S45) is performed. At this condition, the movable mechanism moves the compensation distance in the home direction Dh again.

In other words, the two determination mechanisms are used in steps (S44) and (S44') to determine that the movable mechanism has arrived the position where the logic level signal is transited from the logic high-level signal to the logic low-level signal (falling-edge trigger transition), and the determination in the step (S44) is "YES" or the determination in the step (S44') is "YES", thereby making the position where the logic level signal is transited from the logic high-level signal to the logic low-level signal be an accurate reference positon to significantly reduce influence of vibration, oscillation, or interference of external force or pressure.

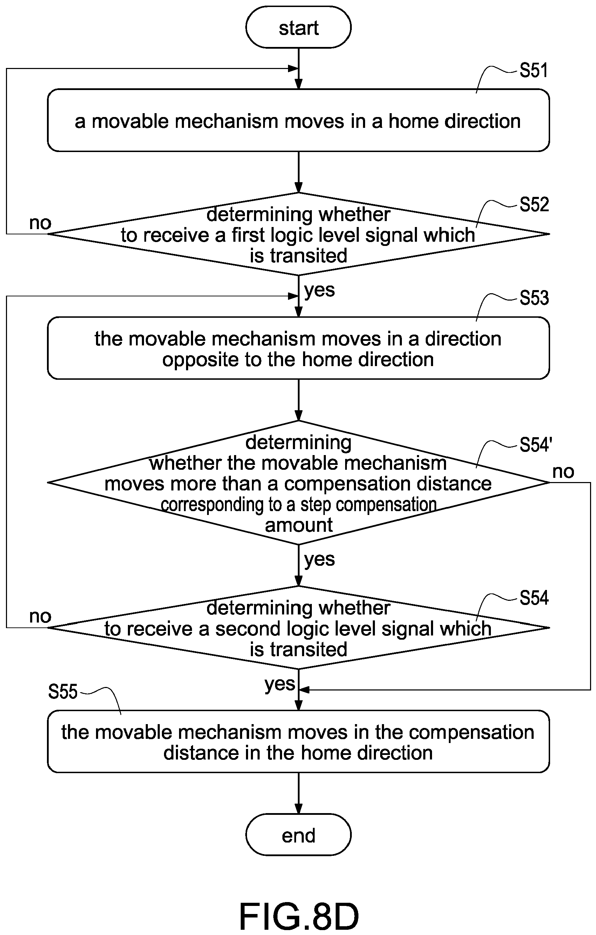

Please refer to FIG. 8D, which shows a flowchart of the method for compensating the home position of the 3D printer according to a fifth embodiment of the present disclosure. Since the steps (S51) to (S55) shown in FIG. 8D are identical to the steps (S41) to (S45) shown in FIG. 8C, the detail descriptions of the steps (S51) to (S55) are omitted here for conciseness. The major difference between the fifth embodiment shown in FIG. 8D and the fourth embodiment shown in FIG. 8C is that the step (S54) shown in FIG. 8D is identical to the step (S44) in FIG. 8C and the step (S54') shown in FIG. 8D is identical to the step (S44') shown in FIG. 8C, that is, the sequence of the steps (S44) and (S44') is exchanged to provide the fifth embodiment in FIG. 8D. Similarly, that can make the position where the logic level signal is transited from the logic high-level signal to the logic low-level signal be an accurate reference positon to significantly reduce influence of vibration, oscillation, or interference of external force or pressure. In the above-mentioned embodiments, although the first logic level signal is the logic high-level signal and the second logic level signal is the logic low-level signal as exemplified for further demonstration, it is technically feasible that the first logic level signal is exchanged to be the logic low-level signal and the second logic level signal is exchanged to be the logic high-level signal.

In conclusion, the present disclosure has following features and advantages:

1. It is to reduce circuit costs, simplify designs of control circuits, reduce occupied installation space to minimize the size of the 3D printer, and accurately calibrate the home position since no Schmitt trigger circuit or comparison circuit is additionally installed.

2. The compensation distance is provided to compensate the error produced from vibration, oscillation, or interference of external force or mechanical structure itself so that the movable mechanism closely arrives and even arrives the actual home position, thereby accurately calibrating the home position.

3. The correction coefficient value is introduced to fine tune the step compensation amount so as to provide more accurate calibration compensation according to the actual operations of the 3D printer.

4. Two determination mechanisms are used to determine that the movable mechanism has arrived the position where the logic level signal is transited from the logic high-level signal to the logic low-level signal (falling-edge trigger transition), thereby making the position where the logic level signal is transited from the logic high-level signal to the logic low-level signal be an accurate reference positon to significantly reduce influence of vibration, oscillation, or interference of external force or pressure.

5. The suitable contactless switch may be selected and used depending on different types of the objects to be sensed to accurately sense the movement position of the object to be sensed.

**Claims**

1. A calibration method for compensating a home position of a three-dimensional printer, the three-dimensional printer providing a sensing switch to sense a movement position of a movable mechanism (Xa, Ya, Za) driven by a motor, and the sensing switch providing a control voltage (Vm) corresponding to the movement position to a microcontroller, **characterized in that** the calibration method comprising steps of:

moving the movable mechanism (Xa, Ya, Za) in a home direction (Dh);
determining whether the microcontroller receiving a logic level signal which is transited corresponding to the control voltage (Vm); and
moving the movable mechanism (Xa, Ya, Za) in a compensation distance corresponding to a step compensation amount in the home direction (Dh) when the microcontroller receives the logic level signal which is transited.

2. The calibration method in claim 1, wherein a voltage variation of the control voltage (Vm) is corresponding to a position change rate of moving the movable mechanism (Xa, Ya, Za).

3. The calibration method in claim 2, wherein the step compensation amount is:

$$Sc = \frac{\Delta V}{Vx} \times Pm \; ;$$

where Sc is the step compensation amount, $\Delta V$ is the voltage variation of the control voltage (Vm), Vx is the maximum value of the control voltage (Vm), and Pm is the number of total steps of the motor corresponding to complete movement of the movable mechanism (Xa, Ya, Za) in the sensing switch.

4. The calibration method in claim 1, wherein the compensation distance is corresponding to a correction coefficient value of the step compensation amount, and the correction coefficient value is a positive number less than 1.

5. The calibration method in claim 1, wherein the logic level signal is a logic high-level signal; the logic level signal which is transited from a logic low-level signal to the logic high-level signal.

6. The calibration method in claim 1, wherein the logic level signal is a logic low-level signal; the logic level signal which is transited from a logic high-level signal to the logic low-level signal.

7. A calibration method for compensating a home position of a three-dimensional printer, the three-dimensional printer providing a sensing switch to sense a movement position of a movable mechanism (Xa, Ya, Za) driven by a motor, and the sensing switch providing a control voltage (Vm) corresponding to the movement position to a microcontroller, **characterized in that** the calibration method comprising steps of:

moving the movable mechanism (Xa, Ya, Za) in a home direction (Dh);
determining whether the microcontroller receiving a first logic level signal which is transited corresponding to the control voltage (Vm);
moving the movable mechanism (Xa, Ya, Za) in a direction opposite to the home direction when the microcontroller receives the first logic level signal which is transited;
determining whether the microcontroller receiving a second logic level signal which is transited corresponding to the control voltage (Vm), wherein a logic level of the second logic level signal is opposite to a logical level of the first logic level signal; and
moving the movable mechanism (Xa, Ya, Za) in a compensation distance corresponding to a step compensation amount in the home direction (Dh) when the microcontroller receives the second logic level signal which is transited.

8. The calibration method in claim 7, wherein after or before the step of "determining whether the microcontroller receiving a second logic level signal which is transited corresponding to the control voltage (Vm)", further comprising steps of:

determining whether the movable mechanism (Xa, Ya, Za) moves more than the compensation distance corresponding to the step compensation amount; and
moving the movable mechanism (Xa, Ya, Za) in the compensation distance in the home direction (Dh) when the movable mechanism (Xa, Ya, Za) moves more than the compensation distance corresponding to the step compensation amount.

**9.** The calibration method in claim 7, wherein a voltage variation of the control voltage (Vm) is corresponding to a position change rate of moving the movable mechanism (Xa, Ya, Za).

**10.** The calibration method in claim 9, wherein the step compensation amount is:

$$Sc = \frac{\Delta V}{Vx} \times Pm \quad ;$$

where Sc is the step compensation amount, $\Delta V$ is the voltage variation of the control voltage (Vm), Vx is the maximum value of the control voltage (Vm), and Pm is the number of total steps of the motor corresponding to complete movement of the movable mechanism (Xa, Ya, Za) in the sensing switch.

**11.** The calibration method in claim 7, wherein the first logic level signal is a logic high-level signal; the first logic level signal which is transited from a logic low-level signal to the logic high-level signal.

**12.** The calibration method in claim 7, wherein the first logic level signal is a logic low-level signal; the first logic level signal which is transited from a logic high-level signal to the logic low-level signal.

**13.** The calibration method in claim 7, wherein the second logic level signal is a logic low-level signal; the second logic level signal which is transited from a logic high-level signal to the logic low-level signal.

**14.** The calibration method in claim 7, wherein the second logic level signal is a logic high-level signal; the second logic level signal which is transited from a logic low-level signal to the logic high-level signal.

**15.** The calibration method in claim 7, wherein the sensing switch is a photo interrupter switch (91), an eddy current proximity switch, a Hall effect proximity switch, an inductive proximity switch, a micro switch, a limit switch, a pressure switch, or a piezo switch.

FIG.1A

FIG.1B

FIG.2A

Zb

Za

Dh

91

# FIG.2B

92A  92B

91

# FIG.3A

Lop

91

# FIG.3B

FIG.4

$V_L = 0.99$    $V_H = 2.31$
$(0.3*V_{DD})$    $(0.7*V_{DD})$

FIG.5

FIG.6A       FIG.6B       FIG.6C

start

a movable mechanism moves in a home direction ⟶ S11

no ◊ determining whether to receive a logic level signal which is transited ⟶ S12

yes

the movable mechanism moves in a compensation distance corresponding to a step compensation amount in the home direction ⟶ S13

end

# FIG.7A

Dh

Lop

S11

S13

$V_H$

# FIG.7B

start

S21

a movable mechanism moves in a home direction

S22

no

determining whether to receive a logic level signal which is transited

yes

S23

the movable mechanism moves in a compensation distance corresponding to a correction coefficient value of a step compensation amount in the home direction

end

# FIG.7C

start

a movable mechanism moves in a home direction ⟅S31

no — determining whether to receive a first logic level signal which is transited ⟅S32

yes

the movable mechanism moves in a direction opposite to the home direction ⟅S33

no — determining whether to receive a second logic level signal which is transited ⟅S34

yes

the movable mechanism moves in a compensation distance corresponding to a step compensation amount in the home direction ⟅S35

end

## FIG.8A

Dh

Lop

S31 — $V_L$

S35

S33

$V_H$

## FIG.8B

start

↓

~S41

a movable mechanism moves in a home direction

↓

~S42

determining whether to receive a first logic level signal which is transited

no →

yes ↓

~S43

the movable mechanism moves in a direction opposite to the home direction

↓

~S44

determining whether to receive a second logic level signal which is transited

no →

yes ↓

~S44'

determining whether the movable mechanism moves more than a compensation distance corresponding to a step compensation amount

no →

yes ↓

S45~

the movable mechanism moves in the compensation distance in the home direction

↓

end

# FIG.8C

start

S51

a movable mechanism moves in a home direction

S52

no

determining whether
to receive a first logic level signal which
is transited

yes

S53

the movable mechanism moves in a direction
opposite to the home direction

S54'

determining
whether the movable mechanism
moves more than a compensation distance
corresponding to a step compensation
amount

no

yes

S54

no

determining whether
to receive a second logic level signal which
is transited

yes

S55

the movable mechanism moves in the compensation
distance in the home direction

end

FIG.8D

Europäisches
Patentamt

European
Patent Office

Office européen
des brevets

# EUROPEAN SEARCH REPORT

**Application Number**

EP 17 20 4975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/246414 A1 (HESS THOMAS [DE] ET AL) 3 September 2015 (2015-09-03) * paragraph [0008] * * paragraph [0011] * * paragraph [0017] * ----- | 1-15 | INV. B33Y50/00 B29C64/386 B29C64/205 B29C64/227 G01B7/00 |
| Y | US 5 608 317 A (HOLLMANN JOERG W [CA]) 4 March 1997 (1997-03-04) * figure 1 * * figure 3 * * column 1, line 13 - line 23 * * column 1, line 40 - line 49 * ----- | 1-15 | |

TECHNICAL FIELDS
SEARCHED     (IPC)

B33Y
B29C
G01B

The present search report has been drawn up for all claims

4

| Place of search | Date of completion of the search | Examiner |
|---|---|---|
| The Hague | 1 August 2018 | Borsch, Sebastian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 4975

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2018

| Patent document cited in search report | | Publication date | Patent family member(s) | | Publication date |
|---|---|---|---|---|---|
| US 2015246414 | A1 | 03-09-2015 | DE 102014203710 B3<br>EP 2913176 A1<br>US 2015246414 A1 | | 28-05-2015<br>02-09-2015<br>03-09-2015 |
| US 5608317 | A | 04-03-1997 | NONE | | |

For more details about this annex : see Official Journal of the European Patent Office, No. 12/82